# EUROPEAN PATENT APPLICATION

(11) **EP 4 593 169 A1**
(43) Date of publication of application: **30.07.2025**
(21) Application number: 24874944.2
(22) Date of filing: 02.10.2024
(51) Int. Cl.: H01M 50/124, H01M 50/126, H01M 50/121, H01M 50/105, H01M 10/04, B32B 15/085, B32B 9/00, B32B 27/08

(54) **BATTERY CASE, BATTERY CELL INCLUDING SAME, AND METHOD FOR MANUFACTURING SAME BATTERY CELL**

(30) Priority: 04.10.2023 KR 20230132102
(71) Applicant: LG Energy Solution, Ltd., Seoul 07335 (KR)
(72) Inventor: CHO, Woo Hyung, Daejeon 34122 (KR); YOO, Su Yeon, Daejeon 34122 (KR); LEE, Seok Kyeong, Daejeon 34122 (KR)
(74) Representative: Goddar, Heinz J.
(86) International application number: PCT/KR2024/014966
(87) International publication number: WO 2025/075388

(57) **Abstract**

Disclosed are a battery case including a first resin layer having a thermally fusible property, a metal layer having a moisture barrier property, a second resin layer configured to protect an internal component from the outside, and a heat dissipation layer including a carbon material and a binder, wherein the heat dissipation layer is added to the surface of the second resin layer, and the heat dissipation layer has a thickness of 40 nm to 800 nm, whereby the heat dissipation performance is improved while an increase in thickness of the battery case is minimized, a battery cell including the same, and a method of manufacturing the battery cell.

## Description

### [Technical Field]

This application claims the benefit of priority to Korean Patent Application No. 2023-0132102 filed on October 4, 2023, the disclosure of which is incorporated herein by reference in its entirety.

The present invention relates to a pouch-shaped battery case including a carbon coating layer, a pouch-shaped battery cell including the same, and a method of manufacturing the pouch-shaped battery cell. More particularly, the present invention relates to a pouch-shaped battery case including a carbon coating layer capable of preventing the transfer of heat generated during a charging and discharging process, thereby preventing further ignition and explosion.

### [Background Art]

Lithium secondary batteries, which are rechargeable and have high energy density, have attracted attention as a new energy source with environmentally-friendly characteristics not only because the lithium secondary batteries can drastically reduce the use of fossil fuels but also because the lithium secondary batteries do not generate by-products from the use of energy.

Lithium secondary batteries may be classified based on the shape thereof. Specifically, lithium secondary batteries may be classified into a cylindrical battery cell manufactured by inserting an electrode assembly into a metal can, a prismatic battery cell manufactured by inserting an electrode assembly into a metal can, and a pouch-shaped battery cell manufactured by inserting an electrode assembly into a battery case made of a laminate sheet including a resin layer and a metal layer.

Thereamong, the pouch-shaped battery cell has advantages of easy deformation and high energy density.

However, since the resin layer constituting the laminate sheet is made of a material that reduces the heat dissipation performance, such as nylon or polyethylene terephthalate, the resin layer has the disadvantage of being vulnerable to a heat generation phenomenon occurring during charging and discharging of the secondary battery. In addition, the amount of discharge increases as the temperature increases, causing the battery usable time to rapidly decrease.

When the temperature of the battery cell exceeds a reference temperature due to the heat generation phenomenon of the secondary battery, the electrode assembly or an electrolyte is decomposed, whereby a large amount of gas is generated. The gas generated in the battery cell increases the internal pressure of the battery cell, whereby a swelling phenomenon, in which the battery cell expands, occurs. Due to the swelling phenomenon, the dimensions of a plurality of pouch-shaped battery cells disposed in a battery pack may change, whereby a pack case may be deformed.

Therefore, various methods have been attempted to reduce the heat generation phenomenon of the pouch-shaped battery cell.

Patent Document 1 relates to a packaging material for pouch-shaped batteries including an outermost layer made of a heat-resistant resin, a barrier layer containing aluminum or an aluminum alloy, and an innermost layer made of a thermoplastic resin, wherein at least one of the layers constituting the packaging material includes a heat dissipation layer to which a carbon material is added or a separate additional heat dissipation layer containing a carbon material and a binder resin. In this configuration, when the temperature in a lithium secondary battery rapidly increases due to overcharging or internal short circuit caused by an abnormal reaction in the battery or when the battery is exposed to a high temperature environment, the carbon material dissipates the heat of the packaging material, whereby it is possible to delay and inhibit an increase in internal temperature of the battery.

In Patent Document 1, a heat dissipation layer having a thickness of 1 µm or more is added to the packaging material, and the results of measurement of the degree of cooling of the packaging material over time are disclosed.

While Patent Document 1 shows that the thickness of the heat dissipation layer is proportional to the heat dissipation performance, there is a problem that the overall thickness of the packaging material further increases when a thicker heat dissipation layer is used for improvement in heat dissipation performance.

Therefore, it is necessary to develop a pouch-shaped battery case having improved heat dissipation characteristics while minimizing an increase in thickness of the pouch-shaped battery case.

### (Prior Art Document)

(Patent Document 1) Korean Patent Application Publication No. 2013-0011977 (2013.01.30)

### [Disclosure]

### [Technical Problem]

The present invention has been made in view of the above problems, and it is an object of the present invention to provide a pouch-shaped battery case having a minimized increase in thickness and significantly improved heat dissipation performance, a pouch-shaped battery cell including the same, and a method of manufacturing the pouch-shaped battery cell.

### [Technical Solution]

A battery case according to the present invention to accomplish the above object includes a first resin layer having a thermally fusible property, a metal layer having a moisture barrier property, a second resin layer configured to protect an internal component from the outside, and a heat dissipation layer including a carbon material and a binder, wherein the heat dissipation layer is added to the surface of the second resin layer, and the heat dissipation layer has a thickness of 40 nm to 800 nm.

In the battery case, the carbon material may be at least one selected from the group consisting of graphite, carbon nanotubes (CNTs), single-walled carbon nanotubes (SWNTs), graphene, and activated carbon fiber (ACF) .

In the battery case, the carbon material may be graphene prepared using a liquid phase exfoliation method.

In the battery case, the heat dissipation layer may have a thickness of 80 nm to 800 nm.

In the battery case, the binder may be included so as to account for 0.01 wt% to 5 wt% based on the total weight of the solid content of the heat dissipation layer.

In the battery case, the binder may be at least one selected from the group consisting of an epoxy-based binder, an acrylic-based binder, a hydrocarbon-based binder, a polyester-based binder, a vinyl-based binder, a urethane-based binder, and an acrylate-based binder or a copolymer thereof.

In a battery cell including the battery case, an electrode assembly is received in the battery case, the battery case having a sealed portion formed on an outer periphery of a cup portion configured to allow the electrode assembly to be received therein, and an electrode lead connected to electrode tabs of the electrode assembly extends outwardly from the sealed portion of the battery case, wherein a heat dissipation layer is provided on an outer surface of the battery case.

An embodiment of a method of manufacturing the battery cell includes preparing the battery case made of a laminate sheet including a first resin layer, a metal layer, and a second resin layer, preparing a solution for the heat dissipation layer including a carbon material and a binder, forming the heat dissipation layer on the battery case, and receiving the electrode assembly in the battery case and sealing the battery case.

The step of forming the heat dissipation layer may be performed using a gravure coating method.

Another embodiment of the method of manufacturing the battery cell includes preparing the battery case made of a laminate sheet including a first resin layer, a metal layer, and a second resin layer, receiving the electrode assembly in the battery case and sealing the battery case, preparing a solution for the heat dissipation layer including a carbon material and a binder, and forming the heat dissipation layer on the battery case.

In the method of manufacturing the battery cell, the step of forming the heat dissipation layer may be performed using a dip coating method.

In addition, the present invention may provide various combinations of the above solving means.

### [Advantageous Effects]

As is apparent from the above description, a battery case according to the present invention exhibits high heat dissipation performance even though a heat dissipation layer has a thickness of tens to hundreds of nanometers.

In addition, manufacturing costs may be reduced by reducing the thickness of the heat dissipation layer, and the risk of lifespan shortening, failure, and fire of a product may be reduced by efficiently managing heat.

In addition, the energy density may be improved by minimizing an increase in thickness of the battery case.

### [Description of Drawings]

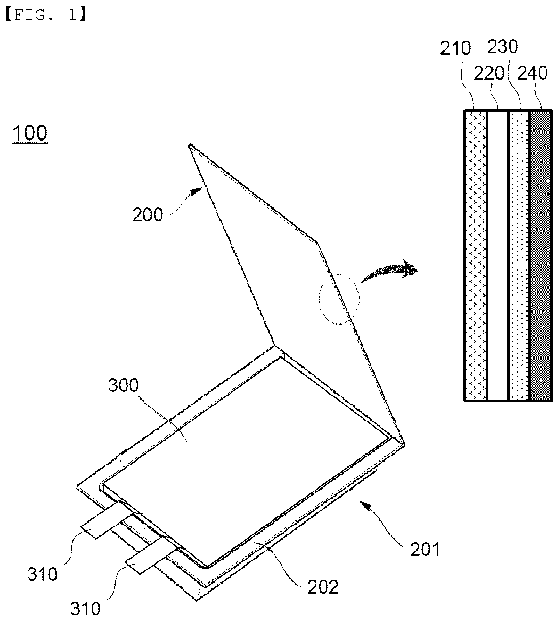

FIG. 1 is a perspective view and a partial vertical sectional view of a pouch-shaped battery cell according to the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

The same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

A description to embody elements through limitation or addition may be applied to all inventions, unless particularly restricted, and does not limit a specific invention.

In the description of the invention and the claims of the present application, singular forms are intended to include plural forms unless mentioned otherwise.

In the description of the invention and the claims of the present application, "or" includes "and" unless mentioned otherwise. Therefore, "including A or B" means three cases, namely, the case including A, the case including B, and the case including A and B.

A battery case according to the present invention may be a pouch-shaped battery case made of a laminate sheet including a resin layer and a metal layer. Specifically, the battery case may include a first resin layer having a thermally fusible property for sealing a battery cell, a metal layer having a moisture barrier property, a second resin layer configured to protect an electrode assembly in the battery case from the outside, and a heat dissipation layer including a carbon material and a binder, wherein the heat dissipation layer may be added to the surface of the second resin layer, and the thickness of the heat dissipation layer may be 40 nm to 800 nm.

Specifically, the first resin layer may be made of a polymeric resin that is thermally fusible, has low electrolyte absorptivity, and is neither swollen nor eroded by the electrolyte, such as a cast polypropylene film (CPP).

The metal layer may be made of aluminum (Al) or an aluminum alloy so as to exhibit the function of improving the strength of the battery case in addition to the function of preventing the inflow of foreign substances, such as gas and moisture, and the outflow of the electrolyte.

Since the second resin layer is required to have excellent resistance to an external environment, it is necessary for the second resin layer to have tensile strength and weather resistance above a predetermined level. In this aspect, a polymer resin of the second resin layer may include polyethylene naphthalate (PEN), polyethylene terephthalate (PET), or oriented nylon, which has excellent tensile strength and weather resistance.

The heat dissipation layer may include a carbon material and a binder configured to bind the same, wherein the carbon material may be at least one selected from the group consisting of graphite, carbon nanotubes (CNTs), single-walled carbon nanotubes (SWNTs), graphene, and activated carbon fiber (ACF), and more particularly may be graphene.

Graphene, which has a structure in which hexagons, each of which is constituted by six carbons, are connected to each other to form a single layer having a two-dimensional structure, is different from carbon nanotubes, which have a tubular one-dimensional structure, and graphite, which has a three-dimensional structure in which a plurality of layers is stacked.

Graphene has an electron mobility of 50,000 cm²/Vs or more, which means that electrons move at the speed of light as if they had zero mass. Graphene is also characterized by structural and chemical stability and excellent thermal conductivity, and is composed of only carbon, which is a relatively light element, making it easy to form one-dimensional or two-dimensional nanopatterns. Above all, a graphene sheet is an inexpensive material and has excellent price competitiveness compared to conventional nanomaterials.

In the pouch-shaped battery case according to the present invention, the thickness of the first resin layer is 10 µm to 50 µm, the thickness of the metal layer is 20 µm to 150 µm, and the thickness of the second resin layer is 5 µm to 40 µm. If the thickness of each of the layers of the pouch-shaped battery case is too small, it is difficult to achieve the function of blocking substances and improvement in strength, which is undesirable, and conversely, if the thickness of each layer is too large, processability is reduced and the thickness of the sheet is increased, which is also undesirable.

The thickness of the heat dissipation layer may be 40 nm to 800 nm, specifically 80 nm to 800 nm. If the thickness of the heat dissipation layer is less than 40 nm, the heat dissipation performance may be reduced and safety may be reduced, which is undesirable, and if the thickness of the heat dissipation layer is greater than 800 nm, the effect of improving the heat dissipation performance is low and the cost is significantly increased, which is also undesirable.

The binder may be at least one selected from the group consisting of an epoxy-based binder, an acrylic-based binder, a hydrocarbon-based binder, a polyester-based binder, a vinyl-based binder, and a urethane-based binder, or a copolymer including the same. For example, the binder may be polyvinylidene fluoride, polyvinylidene fluoride-co-hexafluoropropylene, polyvinylidene fluoride-co-trichloroethylene, polymethylmethacrylate, polyacrylonitrile, polyvinyl acetate, ethylene vinyl acetate copolymer (polyethylene-co-vinyl acetate), polyimide, or polyethylene oxide.

The acrylic-based binder may be at least one selected from the group consisting of methyl (meth)acrylate, ethyl (meth)acrylate, propyl (meth)acrylate, n-butyl (meth)acrylate, t-butyl (meth)acrylate, iso-butyl (meth)acrylate, pentyl (meth)acrylate, hexyl (meth)acrylate, heptyl(meth)acrylate, 2-ethylhexyl(meth)acrylate, octyl(meth)acrylate, isooctyl(meth)acrylate, nonyl(meth)acrylate, decyl(meth)acrylate, and lauryl(meth)acrylate.

The binder may be included so as to account for 0.01 wt% to 5 wt%, specifically 0.1 wt% to 1 wt%, based on the total weight of the solid content.

If the content of the binder is less than 0.01 wt% based on the total weight of the solid content, the surface adhesion may be reduced, which is undesirable, and if the content of the binder is greater than 5 wt% based on the total weight of the solid content, heat dissipation properties may be reduced, which is also undesirable.

Mechanical exfoliation, epitaxy, thermal expansion, chemical functionalization, gas phase, and dispersion in an organic solvent are used as methods of preparing graphene, but at the industrial level, a method of directly growing graphene from a copper plate or a catalytic substrate by chemical vapor deposition and a method of oxidizing and separating graphite to prepare graphene oxide and reducing the same using a reducing agent or through heat treatment to prepare reduced graphene are widely used.

However, the chemical vapor deposition method has the disadvantage that application to a large area, particularly transfer to a glass surface with a large area, is difficult, and the reduced graphene preparation method of preparing and reducing graphene oxide from graphite has problems such as extremely low productivity through a plurality of processes and damage to the inherent properties of graphene.

The carbon material constituting the heat dissipation layer according to the present invention may include graphene prepared using a liquid phase exfoliation method.

The liquid phase exfoliation method is a method designed to maintain the physical and electrical properties of graphene, which may prevent defects formed during the preparation of reduced graphene oxide (rGO) using a chemical exfoliation method and may form graphene without functional groups. The liquid phase exfoliation method is a method of inducing interlayer insertion of graphite using an ionic substance and an organic solvent, dispersing the same, and separating single-layer graphene through layer separation of the dispersed solution using an ultracentrifugation method.

Since graphene prepared using the liquid phase exfoliation method has better dispersibility than graphene prepared using a conventional CVD method or oxidation/reduction method, it is possible to form a uniform coating layer without using a separate dispersant. In addition, since the crystallinity of graphene is excellent as the result of using the liquid phase exfoliation method, adhesion by π-π stacking is excellent when coating as a film.

The present invention provides a battery cell including the battery case, wherein the battery cell may be a pouch-shaped battery cell. FIG. 1 is a perspective view and a partial vertical sectional view of a pouch-shaped battery cell according to the present invention.

Referring to FIG. 1, in the pouch-shaped battery cell 100, an electrode assembly 300 is received in a pouch-shaped battery case 200, a sealed portion 202 is formed on an outer periphery of a cup portion 201 in which the electrode assembly 300 is received, an electrode lead 310 connected to electrode tabs of the electrode assembly 300 extends outwardly from the sealed portion 202 of the pouch-shaped battery case 200, and a heat dissipation layer 240 is provided on an outer surface of the pouch-shaped battery case 200.

A first embodiment of a method of manufacturing the pouch-shaped battery cell may include the steps of preparing a pouch-shaped battery case made of a laminate sheet including a first resin layer, a metal layer, and a second resin layer, preparing a solution for a heat dissipation layer including a carbon material and a binder, forming a heat dissipation layer on the pouch-shaped battery case, and receiving an electrode assembly in the pouch-shaped battery case and sealing the pouch-shaped battery case.

The step of forming the heat dissipation layer may be performed using a method of forming the heat dissipation layer on an outer surface of the second resin layer using a gravure coating method.

In the gravure coating method, 0.01 wt% to 1 wt% of an acrylic-based binder is added to graphene ink prepared using a liquid phase exfoliation method to prepare a solution for the heat dissipation layer.

Before shaping a cup portion in the pouch-shaped battery case, the outer surface of the second resin layer is coated with the solution for the heat dissipation layer using the gravure coating method to form the heat dissipation layer.

The pouch-shaped battery cell is manufactured by shaping a cup portion in the pouch-shaped battery case having the heat dissipation layer thus formed therein, receiving the electrode assembly in the cup portion, and sealing the pouch-shaped battery cell by thermal fusion.

The heat dissipation layer may have a uniform thickness when the gravure coating method is used, but since the pouch-shaped battery cell is manufactured using the coated pouch-shaped battery case, no heat dissipation layer is formed on electrode leads or lead films.

A second embodiment of the method of manufacturing the pouch-shaped battery cell may include the steps of preparing a pouch-shaped battery case made of a laminate sheet including a first resin layer, a metal layer, and a second resin layer, receiving an electrode assembly in the pouch-shaped battery case and sealing the pouch-shaped battery case, preparing a solution for a heat dissipation layer including a carbon material and a binder, and forming a heat dissipation layer on the pouch-shaped battery case.

The method of manufacturing the pouch-shaped battery cell according to the second embodiment is different from the method of manufacturing the pouch-shaped battery cell according to the first embodiment in that the step of forming the heat dissipation layer is performed after the pouch-shaped battery cell is assembled.

Specifically, a solution for a heat dissipation layer is prepared by adding 0.01 wt% to 1 wt% of an acrylic-based binder to graphene ink prepared using the liquid phase exfoliation method.

A dip coating method in which the remaining parts of the assembled pouch-shaped battery cell except the electrode leads may be dipped into the solution for the heat dissipation layer for coating may be used.

Although the dip coating method has a low process cost and can form the heat dissipation layer on all parts of the pouch-shaped battery cell except the electrode leads, the dip coating method has the disadvantages that the thickness of the heat dissipation layer is not uniform and the amount of the solution for the heat dissipation layer that is used is large.

Hereinafter, the present invention will be described with reference to examples, which are provided only for easier understanding of the present invention and should not be construed as limiting the scope of the present invention.

### <Example 1>

A solution for a heat dissipation layer was prepared by adding 1 g of graphene ink prepared using a liquid phase exfoliation method and 0.1 g of an acrylic-based binder as a binder to 100 ml of ethanol as a solvent.

An outer surface of a second resin layer of a pouch-shaped battery case was coated with the solution for the heat dissipation layer using a gravure coating method to form a heat dissipation layer having a thickness of 40 nm.

A cup portion was shaped in the pouch-shaped battery case thus prepared, an electrode assembly was received in the cup portion, and an outer periphery of the cup portion was heated and pressed so as to be sealed by thermal fusion to manufacture 10 pouch-shaped battery cells.

### <Example 2>

10 pouch-shaped battery cells were manufactured using the same method as in Example 1, except that the heat dissipation layer was formed so as to have a thickness of 80 nm.

### <Example 3>

10 pouch-shaped battery cells were manufactured using the same method as in Example 1, except that the heat dissipation layer was formed so as to have a thickness of 200 nm.

### <Example 4>

10 pouch-shaped battery cells were manufactured using the same method as in Example 1, except that the heat dissipation layer was formed so as to have a thickness of 400 nm.

### <Example 5>

10 pouch-shaped battery cells were manufactured using the same method as in Example 1, except that the heat dissipation layer was formed so as to have a thickness of 800 nm.

### <Comparative Example>

10 pouch-shaped battery cells were manufactured using the same method as in Example 1 using a pouch-shaped battery case having no heat dissipation layer formed thereon.

### <Hot box test>

In order to check the heat dissipation performance of the pouch-shaped battery cells manufactured in Examples 1 to 5 and the comparative example, the fully charged pouch-shaped battery cells were placed in a chamber, and the temperature of the chamber was increased from the room temperature at 5 °C/min, and when the temperature reached 140 °C, damage to the pouch-shaped battery cells was checked while the temperature was maintained for 1 hour.

The results and the cost of the heat dissipation layer based on the thickness are shown in Table 1 below.

### <Adhesion test>

In the pouch-shaped battery case having the heat dissipation layer prepared in each of Examples 1 to 5, a scratch was made on the surface of the pouch-shaped battery case where the heat dissipation layer was formed by crossing lines to make an area of 10 mm x 10 mm using a cross hatch cutter, and then a tape was attached to the surface of the pouch-shaped battery case. After rubbing the tape with uniform force, the tape was peeled off and the number of pieces of the heat dissipation layer separated from the surface of the pouch-shaped battery case was counted.

Using the number of the pieces, the magnitude of the adhesion of the heat dissipation layer was expressed as numbers from 0B to 5B.

Specifically, the adhesion test may be performed according to the standards of KS M ISO 2409 and ASTM D3359.

In Table 1 below, the adhesion of the heat dissipation layer was not measured because the pouch-shaped battery case having no heat dissipation layer formed thereon was used in the comparative example.

**[Table 1]**

| | Heat dissipation layer (nm) | Hot box test pass rate (%) | Price (Won/m²) | Adhesion test |
|---|---|---|---|---|
| Example 1 | 40 | 70 | 150 | 5B |
| Example 2 | 80 | 100 | 300 | 5B |
| Example 3 | 200 | 100 | 700 | 5B |
| Example 4 | 400 | 100 | 1,400 | 5B |
| Example 5 | 800 | 100 | 2,800 | 5B |
| Comparative Example | - | 30 | - | - |

The results of the adhesion test are as follows. 5B: The cut surface is clean and the squares of the grating are not separated, 4B: Small pieces of coating are separated at intersections (less than 5% of the grating area), 3B: Small pieces of the coating are separated along the edge and at the intersections of cut portions (5-15% of the grating area), 2B: The edge of the cut surface of the coating and some of the squares are separated (15 to 35% of the grating area), 1B: The coating is greatly peeled off along the edge of the cut surface and the squares are separated (35 to 65% of the grating area), and 0B: More peeled off and separated than 1B (more than 65% of the grating area).

Referring to Table 1 above, it is shown that 30% of the pouch-shaped battery cells of Example 1 having a heat dissipation layer thickness of 40 nm failed to pass the hot box test, and 70% of the pouch-shaped battery cells of the comparative example failed to pass the test. However, it is shown that 100% of the pouch-shaped battery cells of Examples 2 to 5 having heat dissipation layer thicknesses of 80 nm to 800 nm passed the hot box test.

In the present invention, as described above, no separate dispersant is required because graphene prepared using a liquid phase exfoliation method is used as a heat dissipation layer, and even if the thickness of the heat dissipation layer is formed within a range of tens to hundreds of nanometers, the heat dissipation performance is significantly improved.

Those skilled in the art to which the present invention pertains will appreciate that various applications and modifications are possible within the scope of the present invention based on the above description.

### (Description of Reference Numerals)

- 100:: Pouch-shaped battery cell
- 200:: Pouch-shaped battery case
- 201:: Cup portion
- 202:: Sealed portion
- 210:: First resin layer
- 220:: Metal layer
- 230:: Second resin layer
- 240:: Heat dissipation layer
- 300:: Electrode assembly
- 310:: Electrode lead

## Claims

1. A battery case comprising:
a first resin layer having a thermally fusible property;
a metal layer having a moisture barrier property;
a second resin layer configured to protect an internal component from an outside; and
a heat dissipation layer comprising a carbon material and a binder, wherein
the heat dissipation layer is added to a surface of the second resin layer, and
the heat dissipation layer has a thickness of 40 nm to 800 nm.

2. The battery case according to claim 1, wherein the carbon material is at least one selected from a group consisting of graphite, carbon nanotubes (CNTs), single-walled carbon nanotubes (SWNTs), graphene, and activated carbon fiber (ACF).

3. The battery case according to claim 2, wherein the carbon material is graphene prepared using a liquid phase exfoliation method.

4. The battery case according to claim 1, wherein the heat dissipation layer has a thickness of 80 nm to 800 nm.

5. The battery case according to claim 1, wherein the binder is included so as to account for 0.01 wt% to 5 wt% based on a total weight of a solid content of the heat dissipation layer.

6. The battery case according to claim 1, wherein the binder is at least one selected from a group consisting of an epoxy-based binder, an acrylic-based binder, a hydrocarbon-based binder, a polyester-based binder, a vinyl-based binder, a urethane-based binder, and an acrylate-based binder or a copolymer thereof.

7. A battery cell comprising the battery case according to any one of claims 1 to 6, wherein
an electrode assembly is received in the battery case, the battery case having a sealed portion formed on an outer periphery of a cup portion configured to allow the electrode assembly to be received therein, and
an electrode lead connected to electrode tabs of the electrode assembly extends outwardly from the sealed portion of the battery case,
wherein a heat dissipation layer is provided on an outer surface of the battery case.

8. A method of manufacturing the battery cell according to claim 7, the method comprising:
preparing the battery case made of a laminate sheet comprising a first resin layer, a metal layer, and a second resin layer;
preparing a solution for the heat dissipation layer comprising a carbon material and a binder;
forming the heat dissipation layer on the battery case; and
receiving the electrode assembly in the battery case and sealing the battery case.

9. The method according to claim 8, wherein the step of forming the heat dissipation layer is performed using a gravure coating method.

10. A method of manufacturing the battery cell according to claim 7, the method comprising:
preparing the battery case made of a laminate sheet comprising a first resin layer, a metal layer, and a second resin layer;
receiving the electrode assembly in the battery case and sealing the battery case;
preparing a solution for the heat dissipation layer comprising a carbon material and a binder; and
forming the heat dissipation layer on the battery case.

11. The method according to claim 10, wherein the step of forming the heat dissipation layer is performed using a dip coating method.
